# EUROPEAN PATENT APPLICATION

(11) **EP 0 564 065 A2**
(43) Date of publication of application: **06.10.1993**
(21) Application number: 93300045.7
(22) Date of filing: 06.01.1993
(51) Int. Cl.: B65G 1/137, H04B 10/22, G06F 15/24

(54) **Control means and method with mobile source inputs**

(30) Priority: 07.01.1992 US 817665
(71) Applicant: Bianco, James Salvatore, Enfield, CT 07082 (US)
(72) Inventor: Bianco, James Salvatore, Enfield, CT 07082 (US)
(74) Representative: Blatchford, William Michael

(57) **Abstract**

In a system having a plurality of locations at which events take place and having fixed terminals at each of the locations, in which terminals data identifying the occurrences of the events can be entered, and having at least one mobile terminal in which terminal data identifying the occurrences of the events can be entered, an apparatus for identifying the locations to the mobile terminal includes at each location: a light source repeatedly flashing a code uniquely identifying the location; and a photoreceiver operatively connected to the mobile terminal and disposed so as to receive the flashing light when the mobile terminal is at the location and to pass to the mobile terminal the code.

## Description

The present invention relates to control systems for loading and unloading vehicles, generally, and, more particularly, but not by way of limitation, to a novel control system for loading and unloading vehicles which can accept and coordinate inputs from mobile sources.

With the tremendous increase in goods moved by trucks, centralized warehouse/terminals have been constructed in which shipments are consolidated, unloaded, temporarily warehoused, and/or reconsolidated. Some of these warehouse/terminals have sufficient loading bays to accommodate 100 trucks or more. With the resulting volume of goods, complex systems have been developed to track the goods as they are unloaded, warehoused, and reloaded.

Early control systems simply employed clipboards on which workers manually wrote down information from waybills as the goods were unloaded. When the goods were reloaded, waybill information was manually written listed to develop a manifest. Such systems were time consuming and error prone in that they relied on workers to accurately input information.

Later, improved control systems for such operations employed "electronic clip boards" having memories into which were entered data on waybills and other information as goods were unloaded and loaded, by means of electronically scanning bar codes on the waybills with a bar code reading wand attached to the electronic clip board.

A more advanced control system employs bar code reader terminals disposed at each of the loading bays. As each unit comprising a pallet or package is unloaded from a truck, a worker reads an identifying bar code on the unit's waybill. This data is compared to the truck's manifest previously entered in the terminal and is also sent to a hard wired base station which recognizes the source of the data and transmits the data and the location information to a host computer. The host computer, determines the destinations of the goods, determines how the goods are to be consolidated, and provides information to the workers at a loading bay as to the consolidation and even instructs the workers how to distribute the loads on the trucks. As the trucks are being loaded, the workers again read the bar codes on the waybills which data is then entered into the computer to develop a manifest for that shipment. Using the above system, the location of each loading and unloading operation is known, since the bar code terminals have fixed, known locations.

Originally, when forklift trucks were used in such operations to load and unload trucks, a forklift truck operator had to demount and scan the waybills at the local bar code reader terminals each time he took a load off a truck or placed a load on a truck. This method accurately identified the goods and the location, but was time consuming. In order to expedite the procedure, each forklift truck operator is given a bar code reading terminal with which he transmits to the base station via an RF signal a bar code read from a waybill when he loads or unloads goods associated with the waybill. This saves the time previously spent entering the information on the fixed bar code reader terminals; but, unfortunately, this method is also disadvantageous in that it requires that the forklift truck operator accurately identifies his location each time he transmits data.

Accordingly, it is a principal object of the present invention to provide means and method for controlling the flow of goods at a centralized warehouse/terminal which include the automatic identification of the location of mobile data input devices.

It is an additional object of the invention to provide such means and method that are economical and easily implemented.

It is another object of the invention to provide such means and method that can be easily retrofitted to existing installations.

Other objects of the present invention, as well as particular features, elements, and advantages thereof, will be elucidated in, or be apparent from, the following description and the accompanying drawing figures.

The present invention achieves the above objects, among other, by providing, in a preferred embodiment, in a system having a plurality of locations at which events take place and having fixed terminals at each of said locations, in which terminals data identifying the occurrences of said events can be entered, and having at least one mobile terminal in which terminal data identifying said occurrences of said events can be entered, an apparatus for identifying said locations to said mobile terminal, said apparatus comprising at each said location: a light source repeatedly flashing a code uniquely identifying said location; and a photoreceiver operatively connected to said mobile terminal and disposed so as to receive said flashing light when said mobile terminal is at said location and to pass to said mobile terminal said code.

Understanding of the present invention and the various aspects thereof will be facilitated by reference to the accompanying drawing figures, submitted for purposes of illustration only and not intended to define the scope of the invention, in which:

Figure 1 is a fragmentary top plan view of a loading/unloading terminal employing the present invention.

Figure 2 is a fragmentary side elevational view of the terminal of Figure 1.

Reference should now be made to the drawing figures, in which similar or identical elements are given consistent identifying numerals throughout the various figures thereof, and in which parenthetical references to drawing figures direct the reader to the view(s) in which the element(s) being described is (are) best seen, although the element(s) may be seen also in other views.

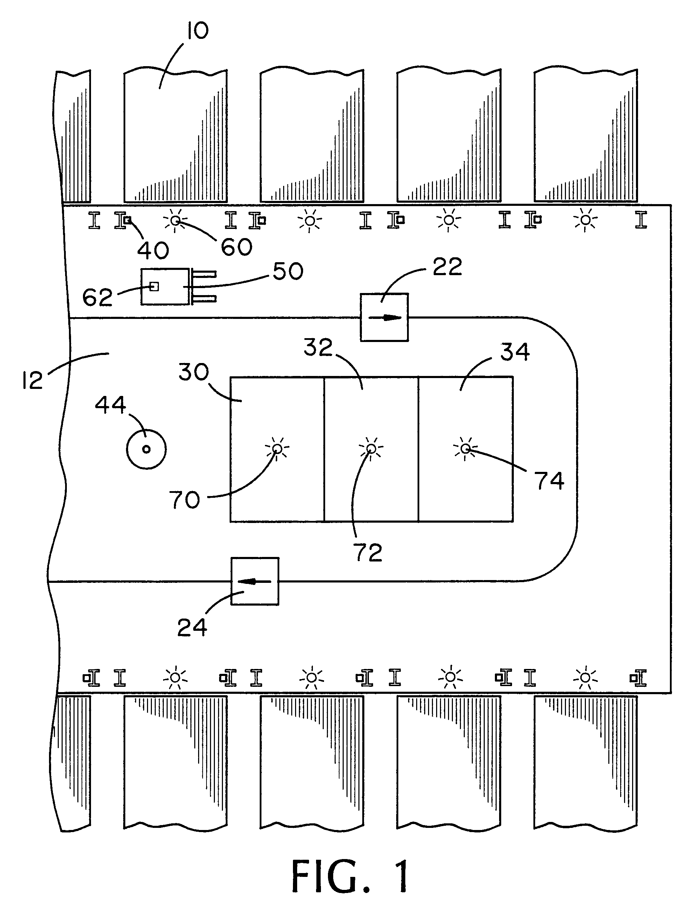

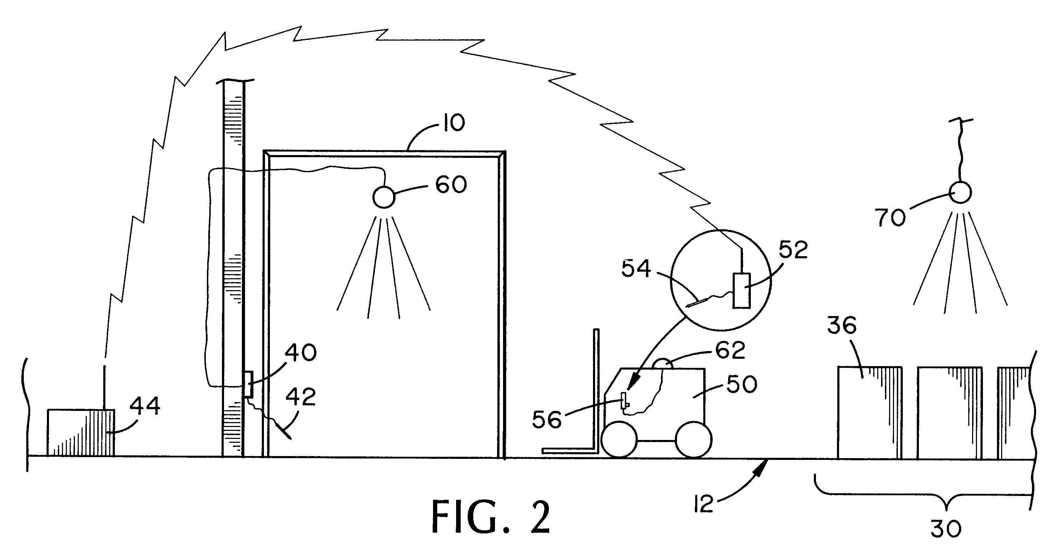

Figures 1 and 2 illustrate a loading/unloading terminal employing the present invention which accommodates a number of trucks, such as truck 10, disposed about a central platform 12. Disposed on platform 12 is a continuous dragline 20 (Figure 1) to which are attached a plurality of carts, such as carts 22 and 24 (Figure 1). Carts 22 and 24 are continuously moved along by dragline 20 in carousel fashion. As goods are unloaded from truck 10, they may be placed on carts 22 and 24 and held there until loaded on another truck. Holding bays 30, 32, and 34 are disposed on platform 12 for the temporary storage of goods, such as goods 36 (Figure 2) in holding bay 30.

Mounted at each truck bay is a bar code reading terminal, such as terminal 40 having a bar code reading wand 42 (Figure 2). Bar code reading terminal 40 is hard-wired to a base station 44 which is in communication with a host computer (not shown). Movably disposed on platform 12 is a forklift truck 50 having thereon a portable bar code reading terminal 52 (Figure 2) which has a bar code reading wand 54, the portable bar code reading terminal being removably insertable in a terminal bracket 56. Portable bar code reading terminal 52 is in RF communication with base station 44.

As is described generally above, when goods are loaded on, or unloaded from, truck 10, the bar codes on waybills of the goods are scanned by one of terminals 40 and 52, so that a record of the locations of the goods can be maintained.

So far, the elements described are conventional in a loading/unloading terminal having a sophisticated control system. The elements and operation of the present invention which automatically indicates the location of operation of forklift truck 50 will now be described.

Disposed at each truck bay is an elevated flashing light, such as flashing light 60, with a generally downwardly directed beam. Flashing light 60 may emit any desired spectrum of light and may emit light in the visible or infrared spectra. Flashing light 60 is wired to bar code reading terminal 40 which causes the light to repeatedly flash a code uniquely indicating the location of the light. Disposed on forklift truck 50 is a photoreceiver 62 located so as to receive the light beam from flashing light 60. Photoreceiver 62 is connected to terminal bracket 56 to pass to the terminal bracket the coded light signal.

Now, when forklift truck 50 passes under flashing light 60 to unload goods from truck 10, photoreceiver 62 will detect the light beam and pass the coded signal to terminal bracket 56 which, in turn, passes the code to portable bar code reading terminal 52. Next, when the operator of forklift truck 50 reads the waybill associated with the goods being unloaded on this incursion of the forklift truck into truck 10, the data transmitted to base station 44 will include the location of bar code reading terminal 40. Base station 44 transmits this data to the host computer and also to bar code reading terminal 40 so that the terminal will accumulate a complete set of data.

In a similar manner, the system will automatically determine the location of forklift truck 50 as goods are being loaded on another truck.

Also in a similar manner, elevated flashing lights 70, 72, and 74, respectively, are disposed above holding bays 30, 32, and 34 to identify those locations when forklift truck 50 is leaving goods at, or removing goods from, one of those holding bays.

It will thus be seen that the objects set forth above, among those elucidated in, or made apparent from, the preceding description, are efficiently attained and, since certain changes may be made in the above construction without departing from the scope of the invention, it is intended that all matter contained in the above description or shown on the accompanying drawing figures shall be interpreted as illustrative only and not in a limiting sense.

It is also to be understood that the following claims are intended to cover all of the generic and specific features of the invention herein described and all statements of the scope of the invention which, as a matter of language, might be said to fall therebetween.

## Claims

1. In a system having a plurality of locations at which events take place and having fixed terminals at each of said locations, in which terminals data identifying the occurrences of said events can be entered, and having at least one mobile terminal in which terminal data identifying said occurrences of said events can be entered, an apparatus for identifying said locations to said mobile terminal, said apparatus comprising at each said location:
(a) a light source repeatedly flashing a code uniquely identifying said location; and
(b) a photoreceiver operatively connected to said mobile terminal and disposed so as to receive said flashing light when said mobile terminal is at said location and to pass to said mobile terminal said code.

2. An apparatus, as defined in Claim 1, wherein said mobile terminal is disposed in a forklift truck and said photoreceiver is mounted on said forklift truck.

3. In a system having a plurality of locations at which events take place and having fixed terminals at each of said locations, in which terminals data identifying the occurrences of said events can be entered, and having at least one mobile terminal in which terminal data identifying said occurrences of said events can be entered, a method for identifying said locations to said mobile terminal, said method comprising:
(a) providing a light source repeatedly flashing a code uniquely identifying said location;
(b) receiving said flashing light; and
(c) passing said code to said mobile terminal.

4. A method, as defined in Claim 3, further comprising transmitting said data identifying said occurrences and the identity of said location to a base station.

5. A method, as defined in Claim 3, further comprising disposing said mobile terminal in a forklift truck and mounting said photoreceiver on said forklift truck.

6. A method, as defined in Claim 3, further comprising said base station transmitting said data to said fixed terminal at said light source.
